# FASCICULE DE BREVET EUROPEEN

(11) **EP 0 524 065 B1**
(45) Date de publication et mention de la délivrance du brevet: **06.09.1995**
(21) Numéro de dépôt: 92401985.4
(22) Date de dépôt: 09.07.1992
(51) Int. Cl.: F16H 61/12, F16H 61/02

(54) **Dispositif de sécurité hydraulique de transmission automatique**
Hydraulisches Sicherheitssystem für automatische Getriebe
Hydraulic safety system for an automatic transmission

(30) Priorité: 19.07.1991 FR 9109147
(43) Date de publication de la demande: 20.01.1993
(73) Titulaire: REGIE NATIONALE DES USINES RENAULT S.A., 92109 Boulogne Billancourt (FR)
(72) Inventeur: Mercier, Jacques, F-75015 Paris (FR)

(56) Documents cités:
- FR-A- 2 570 458
- GB-A- 2 164 397

## Description

La présente invention est relative à un dispositif de sécurité hydraulique de transmission automatique à rapports étagés dont les éléments, embrayages et freins, sont alimentés par un distributeur hydraulique piloté par des électrovannes séquentielles et une vanne manuelle.

Une telle disposition est notamment décrite dans la publication FR-A-2 570 458 de la demanderesse. Le dispositif faisant l'objet de cette publication comporte des électrovannes de séquence excitées en fonction d'informations concernant la marche du véhicule, de manière à assurer au moment opportun les changements de rapports souhaitables.

Avec un dispositif de ce type, en cas d'informations erronées, ou de panne subite sur une électrovanne commandant une vanne de séquence, ce qui entrai-ne sa bascule immédiate, il convient de prendre des mesures de sauvegarde pour éviter un rétrogradage brutal non voulu sur un rapport inférieur, pouvant détériorer la transmission.

L'invention propose à cet effet un dispositif de sécurité hydraulique assurant la sauvegarde souhaitée.

Elle concerne un dispositif de sécurité hydraulique de transmission automatique à rapports étagés comportant une vanne manuelle et deux ou trois vannes de séquence, chacune à deux positions, commandées par des électrovannes qui assurent selon leur excitation, la mise à la bâche ou l'alimentation d'une chambre de mise en pression desdites vannes de séquences, l'affectation des états combinés de ces vannes de séquence aux rapports de transmissions se faisant pour l'ordre naturel de montée des rapports, selon un code binaire réfléchi (voir FR-A-2 570 458).

Selon l'invention, la chambre de mise en pression d'une vanne de séquence comporte un deuxième canal pouvant être obturé ou mis à la bâche pour une seule position donnée de la vanne de séquence comportant le deuxième canal et d'une deuxième vanne de séquence.

Selon un mode de réalisation de l'invention, la mise à la bâche du deuxième canal s'effectue à travers deux vannes de séquence et la vanne manuelle.

Selon un mode de réalisation de l'invention, la mise à la bâche n'est possible que lorsque la vanne manuelle est en position de marche avant.

Selon un mode de réalisation de l'invention, l'obturation du deuxième canal est obtenue, indépendamment de la position de la vanne manuelle à l'aide des vannes de séquence.

Selon un mode de réalisation de l'invention, l'obturation du deuxième canal est obtenue, quelles que soient les positions des vannes de séquence, par la vanne manuelle lorsque celle-ci est en position neutre ou parking.

Selon un mode de réalisation de l'invention, la position des deux vannes de séquence autorisant la mise à la bâche correspond au quatrième rapport, dans le cas d'une boîte à quatre rapports.

Selon un mode de réalisation de l'invention, la position de deux vannes de séquence autorisant la mise à la bâche correspond au quatrième et/ou au cinquième rapport dans le cas d'une boîte à cinq rapports.

Selon un mode de réalisation de l'invention, la position des deux vannes de séquence autorisant la mise à la bâche correspond au cinquième et/ou au sixième rapport, dans le cas d'une boîte à six rapports.

L'invention sera mieux comprise à la lecture suivante d'un mode de réalisation particulier de celle-ci, en liaison avec les dessins annexés sur lesquels :
- la figure 1 représente une vanne de séquence, utilisée dans le dispositif de sécurité hydraulique de l'invention,
- la figure 2 représente la même vanne de séquence, munie d'un conduit de mise à la bâche,
- la figure 3 représente un circuit hydraulique de sécurité conforme à l'invention.

L'invention s'applique par exemple à une transmission à quatre rapports de marche avant commandés par deux vannes de séquence du type de celui décrit dans la publication FR-A-2.570.458 précitée. Ces deux vannes 17 et 17' sont pilotées respectivement par les électrovannes EV1 et EV2. On rappelle que ces vannes de séquences ont chacune deux positions stables notées A et A̅ (respectivement B et B̅) selon que l'électrovanne EV1 (respectivement EV2) est excitée ou non.

On voit donc qu'il y a quatre états possibles, chaque état étant affecté à un rapport de marche avant.

Selon une première caractéristique de l'invention, l'affectation des états aux quatre rapports de transmission se fait dans l'ordre naturel de montée des rapports selon un code binaire réfléchi, c'est-à-dire qu'une seule vanne est manoeuvrée lors d'un passage d'un rapport n au rapport n + 1.

A titre d'exemple, on aura ainsi le tableau suivant :
- 1er rapport A B̅
- 2ème rapport A B
- 3ème rapport A̅ B
- 4ème rapport A̅ B̅
Un code binaire réfléchi complet étant cyclique, on constate que lors de la manoeuvre d'une seule vanne, on passe d'un rapport établi soit au précédent, soit au suivant, mais qu'en plus, sans précaution particulière la seule manoeuvre de la vanne A, lorsqu'on est sur le quatrième rapport, impose le premier rapport. Une telle éventualité serait évidemment très dommageable pour la transnussion. L'objet de l'invention est donc d'apporter une solution à ce problème et ce, de manière hydraulique, indépendamment des mesures de sécurité électriques ou électroniques prises dans le logiciel de commande.

D'une manière plus précise, l'invention consiste à interdire, lorsqu'on est sur le quatrième rapport, la prise du premier rapport même si l'ordre en est donné, tout en autorisant sa prise à partir de la position neutre et des positions troisème ou deuxième rapport.

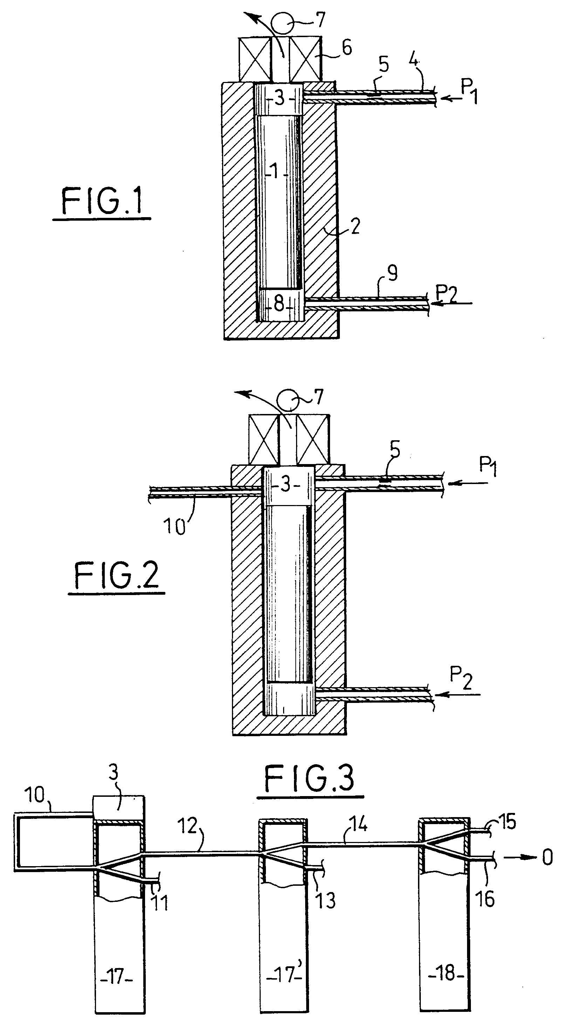

La vanne de séquence représentée sur la figure 1 possède un corps de section cylindrique 1 pouvant coulisser dans un corps fixe 2 possédant à sa partie supérieure une chambre 3 de mise en pression, alimentée par un canal 4 comportant un gicleur 5. Cette chambre est surmontée par une électrovanne 6 attirant sur son siège, en position excitée, la bille 7. Celle-ci obture alors la partie supérieure de la chambre 3 et supprime de ce fait sa mise à la bâche. A la partie inférieure de la vanne, se trouve la chambre de pression 8, alimentée par le canal 9. La pression P₁ dans le canal 4 est régulée et vaut sensiblement le double de la pression P₂ elle aussi régulée dans le canal 9 et la chambre 8.

Le fonctionnement de cette vanne de séquence est le suivant :
- si l'électrovanne est excitée, la bille est attirée, fermant la chambre 3 ; la pression dans la chambre 3 devient égale à P₁, et en conséquence la vanne de séquence bascule vers le bas.
- si l'électrovanne n'est pas excitée, du fait de la présence du gicleur 5 sur le conduit 4, et du gros trou de mise à la bâche par le décollement de la bille, la pression de la chambre 3 est sensiblement nulle et en conséquence la vanne bascule vers le haut.

Ces deux positions seront notées A et A̅ pour la vanne 17 et de même B et B̅ pour la vanne 17'

L'invention consiste à créer une mise à la bâche conditionnelle supplémentaire de la chambre 3 de la vanne 17 de façon à ce qu'elle reste en position A̅, même si, son électrovanne étant excitée, sa bille 7 vient obturer la mise à la bâche normale de la chambre 3.

Cette mise à la bâche conditionnelle apparaît sur la figure 2 sous la forme du conduit 10 débouchant dans la chambre 3. Du fait de la section relative de ce conduit vis-à-vis de celle du gicleur 5, la pression dans la chambre 3 sera sensiblement nulle même si la bille 7 obture la partie supérieure de la chambre 3.

Selon une autre caractéristique de l'invention, la mise à la bâche du conduit 10 est asurée à travers les deux vannes de séquence 17 et 17' et la vanne manuelle 18 lorsque ces trois vannes sont dans la position du quatrième rapport, ce conduit 10 étant obturé par les mêmes vannes dans toutes les autres situations.

A titre d'exemple, la figure 3 présente un circuit conforme à l'invention. Sur cette figure, on voit de manière schématique, la vanne de séquence 17 surmontée de sa chambre de mise en pression 3 dans laquelle débouche le conduit 10, la vanne de séquence 17' et la vanne manuelle 18.

Conformément à l'invention, le conduit 10 traverse la vanne 17 et se trouve obturé par le bouchon 11 si la vanne est dans la position A. Si cette vanne est dans la position A̅, le conduit 10 est en communication avec le conduit 12 qui arrive sur la vanne 17'. Si cette vanne est en position B, le conduit 12 est obturé par le bouchon 13. Si cette vanne est dans la position B̅, le conduit 12 est en communication avec le conduit 14 qui arrive sur la vanne manuelle 18. Si cette vanne est en position parking ou neutre, le conduit 14 est obturé par le bouchon 15. Si cette vanne est dans la position marche avant, le conduit 14 est mis en communication avec le conduit 16 qui est relié à la bâche.

En se référant au tableau des séquences,
- 1er rapport : A B̅
- 2ème rapport : A B
- 3ème rapport : A̅ B
- 4ème rapport : A̅ B̅,
on voit qu'à partir du 4ème rappport :
- la prise du 3ème rapport est possible par la commande de l'électrovanne de la vanne 17', la vanne 17 restant en position A̅ ; la mise à la bâche du conduit 10 est alors obturé par le bouchon 13 situé sur la vanne 17', permettant ainsi la prise du deuxième rapport par la commande de l'électrovanne de la vanne 17 ; le conduit 10 alors est obturé une nouvelle fois par le bouchon 11 de la vanne 17 permettant ainsi la prise du premier rapport par manoeuvre de l'électrovannne de la vanne 17', la vanne 17 restant en position A.
- la prise directe du deuxième rapport est possible par manoeuvre des électrovannes des vannes 17 et 17', l'action sur 17' fermant le conduit 10 ainsi qu'on l'a vu, rendant ainsi possible la manoeuvre de la vanne 17.
- la prise directe du premier rapport est impossible puisque les vannes étant dans la position A̅ B̅, la mise à la bâche de la chambre 3 est assurée par les conduits 12, 14 et 16 malgré la commande de l'électrovanne de la vanne 17.
- à partir de la position neutre, quelles que soient les positions des vannes 17 et 17' et des excitations de leurs électrovannes, la mise à la bâche de la chambre 3 est obturée ne serait-ce que par la vanne manuelle 18, ce qui permet de prépositionner les vannes 17 et 17' dans la position du premier rapport.

L'invention ne se limite pas aux transmissions à quatre rapports, mais s'applique également aux transmissions à cinq ou six rapports. Pour de telles transmissions, il est nécessaire de disposer d'une troisième vanne de séquence 17'' dont l'état C ou C̅ va permettre de commander les cinq ou six rapports, un ou deux états des vannes 17 et 17' étant doublé pour avoir les combinaisons supplémentaires souhaitées.

A titre d'exemple non limitatif on donne ci-après le tableau de séquence d'une boîte à cinq rapports :
- 1er rapport : A B̅ C̅
- 2ème rapport : A B C̅
- 3ème rapport : A̅ B C̅
- 4ème rapport : A̅ B̅ C̅
- 5ème rapport : A̅ B̅ C
On voit qu'ici le seul risque d'obtenir par manoeuvre d'une seule vanne un rétrogradage indésirable, est à partir du quatrième rapport de manoeuvrer la vanne 17 qui donnerait le premier rapport. On est ainsi, vis-à-vis des vannes 17 et 17' dans la même situation que le rétrogradage du quatrième au premier rapport dans la boîte à quatre rapports. L'invention s'applique donc intégralement avec par le même schéma hydraulique aux vannes de séquence 17 et 17' et à la vanne manuelle de la boîte à cinq rapports.

De la même façon, on peut appliquer l'invention à une boîte à six rapports ayant à titre d'exemple le tableau de séquence suivant :
- 1er rapport : A B̅ C
- 2ème rapport : A B̅ C̅
- 3ème rapport : A B C̅
- 4ème rapport : A̅ B C̅
- 5ème rapport : A̅ B̅ C̅
- 6ème rapport : A̅ B̅ C
Le risque existant dans ce cas est d'engager par la seule manoeuvre de la vanne 17, le premier rapport à partir du sixième rapport, ou le deuxième rapport à partir du cinquième rapport.

L'invention s'applique donc intégralement à une boîte à six rapports grâce au même schéma hydraulique, constitué des vannes de signaux 17 et 17' et de la vanne manuelle 18 de la boîte à six rapports.

En conclusion, le dispositif de sécurité hydraulique faisant l'objet de l'invention s'applique à un tableau de séquences quelconque, pourvu qu'il respecte pour les vannes de séquence un code binaire réfléchi, le rôle des vannes 17, 17' et 17'' pouvant naturellement être interverti.

## Revendications

1. Dispositif de sécurité hydraulique de transmission automatique à rapports étagés comportant une vanne manuelle (18) et deux ou trois vannes de séquence (17, 17', 17'') chacune à deux positions commandées par des électrovannes (6) qui assurent selon leur excitation la mise à la bâche ou l'alimentation d'une chambre de mise en pression desdites vannes de séquence (17, 17', 17'') en suivant un code binaire réfléchi pour l'ordre naturel de montée des rapports, caractérisé en ce que la chambre de mise en pression (3) d'une vanne de séquence (17, 17', 17'') comporte un deuxième canal (10) pouvant être obturé, ou mis à la bâche pour une seule position donnée de la vanne de séquence (17) comportant le deuxième canal et d'une deuxième vanne de séquence (17').

2. Dispositif de sécurité hydraulique selon la revendication 2, caractérisé en ce que la mise à la bâche du deuxième canal (10) s'effectue à travers deux vannes de séquence (17, 17') et la vanne manuelle (18).

3. Dispositif de sécurité hydraulique selon la revendication 2, caractérisé en ce que la mise à la bâche n'est possible que lorsque la vanne manuelle (18) est en position de marche avant.

4. Dispositif de sécurité selon les revendications 2 ou 3, caractérisé en ce que l'obturation du deuxième canal (10) est obtenue, indépendamment de la position de la vanne manuelle (18) à l'aide des vannes de séquence (17, 17', 17'').

5. Dispositif de sécurité hydraulique selon la revendication 1, caractérisé en ce que l'obturation du deuxième canal (10) est obtenue, quelles que soient les positions des vannes de séquence, par la vanne manuelle (18) lorsque celle-ci est en position neutre ou parking.

6. Dispositif de sécurité hydraulique selon la revendication 1, caractérisé en ce que la position des deux vannes de séquence (17, 17') autorisant la mise à la bâche est celle correspondant au quatrième rapport dans le cas d'une boîte à quatre rapports.

7. Dispositif de sécurité hydraulique selon la revendication 1, caractérisé en ce que la position des deux vannes de séquence (17, 17') correspond au quatrième et/ou au cinquième rapport dans le cas d'une boîte à cinq rapports.

8. Dispositif de sécurité hydraulique selon la revendication 1, caractérisé en ce que la position des deux vannes de séquence (17, 17') correspond au cinquième et/ou au sixième rapport dans le cas d'une boîte à six rapports.

## Claims

1. A hydraulic safety device for an automatic transmission with staged ratios comprising a manual valve (18) and two or three sequence valves (17, 17', 17'') each having two positions and actuated by electrically operated valves (6) which according to their excitation provide for connection to the tank or the feed of a pressurising chamber of said sequence valves (17, 17', 17'') in accordance with a reflected binary code for the natural order of upward shifting of the ratios, characterised in that the pressurising chamber (3) of a sequence valve (17, 17', 17'') comprises a second duct (10) which can be closed off or connected to the tank for a single given position of the sequence valve (17) comprising the second duct and a second sequence valve (17').

2. A hydraulic safety device according to claim 1 characterised in that the connection to the tank of the second duct (10) is effected through two sequence valves (17, 17') and the manual valve (18).

3. A hydraulic safety device according to claim 2 characterised in that the connection to the tank is possible only when the manual valve (18) is in the forward travel position.

4. A safety device according to claim 2 or claim 3 characterised in that closure of the second duct (10) is effected independently of the position of the manual valve (18) by means of the sequence valves (17, 17', 17'').

5. A hydraulic safety device according to claim 1 characterised in that closure of the second duct (10) is effected irrespective of the positions of the sequence valves by the manual valve (18) when it is in the neutral or parking position.

6. A hydraulic safety device according to claim 1 characterised in that the position of the two sequence valves (17, 17') permitting connection to the tank is that corresponding to the fourth ratio in the case of a box having four ratios.

7. A hydraulic safety device according to claim 1 characterised in that the position of the two sequence valves (17, 17') corresponds to the fourth and/or the fifth ratio in the case of a box having five ratios.

8. A hydraulic safety device according to claim 1 characterised in that the position of the two sequence valves (17, 17') corresponds to the fifth and/or the sixth ratio in the case of a box having six ratios.

## Patentansprüche

1. Hydraulisches Sicherheitssystem für automatische Getriebe mit gestuften Gängen, mit einem manuellen Ventil (18) und zwei oder drei Stufenventilen (17,17',17''), deren jedes zwei Stellungen einnehmen kann, die durch Elektroventile (6) steuerbar sind, die, je nach ihrer Ansteuerung, die Verbindung mit dem Umgebungsgehäuse oder die Druckbeaufschlagung einer Kammer der Stufenventile (17,17',17'') ermöglichen durch Ansteuerung mit einem reflektiert-binären Code, gemäß einer natürlichen ansteigenden Ordnung der Gänge, **dadurch gekennzeichnet**, daß die Kammer (3) zur Druckbeaufschlagung der Stufenventile (17,17',17'') eine zweite Leitung (10) aufweist, die entweder verschlossen oder mit dem Umgebungsgehäuse verbindbar ist für eine einzige vorgegebene Stellung des Stufenventils (17), das die zweite Leitung enthält, sowie des zweiten Stufenventils (17').

2. Hydraulisches Sicherheitssystem nach Anspruch 1**, dadurch gekennzeichnet**, daß die Verbindung mit dem Umgebungsgehäuse der zweiten Leitung (10) durch die beiden Stufenventile (17,17') und das manuelle Ventil (18) hindurch erfolgt.

3. Hydraulisches Sicherheitssystem nach Anspruch 2, **dadurch gekennzeichnet**, daß die Verbindung mit dem Umgebungsgehäuse nur möglich ist, wenn sich das manuelle Ventil (18) in der Stellung für Vorwärtsfahrt befindet.

4. Hydraulisches Sicherheitssystem nach den Ansprüchen 2 oder 3, **dadurch gekennzeichnet**, daß der Verschluß der zweiten Leitung (10) unabhängig von der Stellung des manuellen Ventils (18) mit Hilfe der Stufenventile (17,17',17'') erfolgt.

5. Hydraulisches Sicherheitssystem nach Anspruch 1, **dadurch gekennzeichnet**, daß der Verschluß der zweiten Leitung (10), unabhängig von den Stellungen der Stufenventile, durch das manuelle Ventil (18) erfolgt, wenn sich dieses in der neutralen Stellung oder Parkstellung befindet.

6. Hydraulisches Sicherheitssystem nach Anspruch 1, **dadurch gekennzeichnet**, daß die Stellung der beiden Stufenventile (17,17') entsprechend der Verbindung mit dem Umgebungsgehäuse diejenige ist, welche einem vierten Gang entspricht, im Falle eines Getriebes mit vier Gängen.

7. Hydraulisches Sicherheitssystem nach Anspruch 1, **dadurch gekennzeichnet**, daß die Stellung der beiden Stufenventile (17,17') einem vierten und/oder fünften Gang entspricht, im Falle eines Getriebes mit fünf Gängen.

8. Hydraulisches Sicherheitssystem nach Anspruch 1, **dadurch gekennzeichnet**, daß die Stellung der beiden Stufenventile (17,17') einem fünften und/oder sechsten Gang entspricht, im Falle eines Getriebes mit sechs Gängen.
